# EUROPÄISCHE PATENTANMELDUNG

(11) **EP 0 985 515 A2**
(43) Veröffentlichungstag der Anmeldung: **15.03.2000**
(21) Anmeldenummer: 99116160.5
(22) Anmeldetag: 20.08.1999
(51) Int. Cl.: B29C 63/04, B29C 63/16

(54) **Umbugschieber**

(30) Priorität: 08.09.1998 DE 19840957
(71) Anmelder: Volkswagen Aktiengesellschaft, 38436 Wolfsburg (DE)
(72) Erfinder: Kreuger, Manfred, 38446 Wolfsburg (DE); Mohr, Jörg, 38106 Braunschweig (DE); Peters, Katja, 38104 Braunschweig (DE)

(57) **Zusammenfassung**

Die Erfindung betrifft einen Umbugschieber (1) zum Kaschieren des Randbereiches (2a) eines Spritzgußteiles (2), wobei mit Hilfe des Umbugschiebers (1) die Rückseite des oberen Randbereiches (2a) des vzw. in einer Aufnahme (3) angeordneten Spritzgußteiles (2) mit einer Folie (4) kaschierbar ist, wobei der Umbugschieber (1) einen unteren Bereich (1a) einer - im Anfangszustand - über den Randbereich (2a) des Spritzgußteiles (2) hinausstehende Folie (4) und einen seitlichen Bereich (1b) zum Andrücken der umgebogenen Folie (4) auf den oberen Randbereich (2a) der Rückseite des Spritzgußteiles (2) aufweist.

Die Kaschierung ist dadurch verbessert, daß der seitliche Bereich (1b) derartig elastisch verformbar ausgeführt ist, so daß der mit der Folie (4) oder dem Spritzgußteil (2) in Kontakt kommende Teil des seitlichen Bereiches (1b) im wesentlichen an die Kontur des Spritzgußteiles (2) anpaßbar ist.

## Beschreibung

Die Erfindung betrifft einen Umbugschieber zum Kaschieren des Randbereichs eines Halbzeug, wobei mit Hilfe des Umbugschiebers die Rückseite des oberen Randbereichs des, vorzugsweise in einer Aufnahme angeordneten Halbzeug mit einer Folie kaschierbar ist, wobei der Umbugschieber einen unteren Bereich zum Umbiegen einer - im Anfangszustand - über den Randbereich des Halbzeug hinausstehenden Folie und einen seitlichen Bereich zum Andrücken der umgebogenen Folie auf den oberen Randbereich der Rückseite des Halbzeug aufweist.

Im Stand der Technik, von dem die Erfindung ausgeht, sind Umbugschieber bekannt, die als massive Messing- oder Aluminiumschieber ausgeführt sind. Derartige Umbugschieber werden benutzt, um Halbzeug, d. h. insbesondere die Randbereiche der Halbzeug entsprechend zu kaschieren, nämlich eine Folie auf den entsprechenden Bereich eines Halbzeug aufzukleben bzw. auf das Halbzeug zu pressen oder zu drücken. Im allgemeinen ist in einer Aufnahme ein Halbzeug entsprechend angeordnet bzw. eingelegt. Die Aufnahme weist hierzu eine Ausnehmung auf, in die das Halbzeug eingelegt werden kann. Auf der Vorderseite des Halbzeug ist bereits eine Folie zum Kaschieren der Vorderseite des Halbzeug aufgeklebt. Hierbei wird die Folie umbuggerecht beschnitten, d. h. ein Folienlappen bleibt stehen für den Umbug. Wenn nun das Halbzeug in die Aufnahme eingelegt wird, befindet sich diese Folie zwischen der Aufnahme und dem Halbzeug. Problematisch ist das Kaschieren des Randbereichs des Halbzeug, insbesondere des oberen Randbereiches der Rückseite des Halbzeugs. Zunächst steht nach dem Einlegen des Halbzeugs in die Aufnahme die Folie über den Randbereich des Halbzeugs nach oben hinaus. Der Umbugschieber wird nun so verschoben, daß sein unterer Bereich die über den Randbereich des Halbzeugs hinausstehende Folie in Richtung auf die Rückseite des Halbzeugs umbiegt. Hierzu wird der Umbugschieber im wesentlichen horizontal verschoben. Wenn der Umbugschieber horizontal so weit verschoben ist, daß sein seitlicher Bereich den Randbereich des Halbzeugs hintergreift, wird der Umbugschieber nach unten verschoben, so daß mit Hilfe des seitlichen Bereichs des Umbugschiebers die Folie gegen den oberen Randbereich des Halbzeugs gedrückt wird, wobei der Umbugschieber nach dessen Verschiebung nach unten wieder 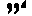 zurück" seitlich in Richtung auf die Rückseite des Halbzeugs verschoben werden kann. Da auf der entsprechenden Seite der Folie Klebstoff vorgesehen ist, wird die Folie auf Grund des durch den seitlichen Bereich des Umbugschiebers realisierten Druck bzw. die hierdurch realisierte Andrückkraft die Folie mit der Rückseite des Halbzeugs und der zugeführten Wärme in Haftung verbracht.

Bei den im Stand der Technik bekannten Umbugschiebern, die als massive Messing- oder Aluminiumschieber ausgeführt sind, ist von Nachteil, daß auch der seitliche Bereich des Umbugschiebers aus Messing oder Aluminium besteht. Wird nun zum Andrücken der Folie der Umbugschieber nach unten bzw. hiernach seitlich gegen die Rückwand des Halbzeugs verschoben, wobei der seitliche Bereich zumeist an die Kontur der Rückseite des Halbzeugs angepaßt ist, so kann die Folie nicht optimal auf die Rückseite des oberen Randbereichs des Halbzeugs aufgedrückt werden. Dies liegt einerseits daran, daß der seitliche Bereich des Umbugschiebers bei der Fertigung, d. h. Anpassung an die entsprechende Kontur des herzustellenden Halbzeugs Toleranzen aufweist, und andererseits das hergestellte Halbzeug selbst, d. h. dessen Kontur ebenfalls Toleranzen bzw. Abweichungen aufweist. Die umzubugende Folie weist ebenfalls Toleranzen durch die Versteckung beim Kaschierprozeß auf. Da die beiden hier zusammenwirkenden Elemente, nämlich der seitliche Bereich des Umbugschiebers und die Rückseite des Halbzeugs Toleranzen bzw. Abweichungen aufweisen, kann folglich eine genaue Andrückung der Folie auf die Rückseite des oberen Randbereichs des Halbzeugs nicht optimal erfolgen, so daß eine optimale Kaschierung dieses Bereichs auch nicht gewährleistet ist. Die Praxis hat gezeigt, daß es hier zu Wellenbildungen innerhalb der Folie kommen kann, oder auch eine vollständige Haftung der Folie auf dem Halbzeug nicht immer vollständig gewährleistet ist.

Der Erfindung liegt daher die Aufgabe zugrunde, einen Umbugschieber der eingangs genannten Art, derart auszugestalten und weiterzubilden, daß eine Kaschierung des oberen Randbereiches des Halbzeugs verbessert ist.

Die zuvor aufgezeigte Aufgabe ist nun dadurch gelöst, daß der seitliche Bereich derartig elastisch verformbar ausgeführt ist, so daß der mit der Folie oder dem Halbzeug in Kontakt kommende Teil des seitlichen Bereiches im wesentlichen an die Kontur des Halbzeugs anpaßbar ist. Hierdurch werden die eingangs beschriebenen Nachteile vermieden, da durch die elastische Verformbarkeit des seitlichen Bereiches die Toleranzen des Halbzeugs entsprechend ausgeglichen werden können und die Folie optimal auf die Rückseite des oberen Randbereiches des Halbzeugs aufgedrückt werden kann. Weiterhin ist von Vorteil, daß aufgrund der Anpassung des seitlichen Bereiches an die Kontur des Halbzeugs ein Andrücken bzw. eine Anhaftung der Folie auf dem Halbzeug ohne eine Wellenbildung gewährleistet ist. Es ist nämlich in allen Bereichen ein entsprechender Anpreßdruck und damit eine entsprechende Folienhaftung realisierbar, wobei mit dem erfindungsgemäßen Umbugschieber die Herstellung einer 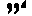 sauberen Kante" des Halbzeugs gewährleistet ist.

Es gibt nun eine Vielzahl von Möglichkeiten, den erfindungsgemäßen Umbugschieber in vorteilhafter Weise auszugestalten und weiterzubilden. Hierfür darf an dieser Stelle auf die dem Patentanspruch 1 nachgeordneten Patentansprüche verwiesen werden. Im folgenden soll nun der erfindungsgemäße Umbugschieber anhand einer Zeichnung näher erläutert werden. In der Zeichnung zeigt
- Fig. 1: eine erste Ausführungsform des erfindungsgemäßen Umbugschiebers teilweise geschnitten in einer schematischen Darstellung von der Seite,
- Fig. 2: eine zweite Ausführungsform des erfindungsgemäßen Umbugschiebers teilweise geschnitten in einer schematischen Darstellung von der Seite,
- die Fig. 3-5: die Arbeitsweise eines erfindungsgemäßen Umbugschiebers teilweise geschnitten in einer schematischen Darstellung von der Seite.

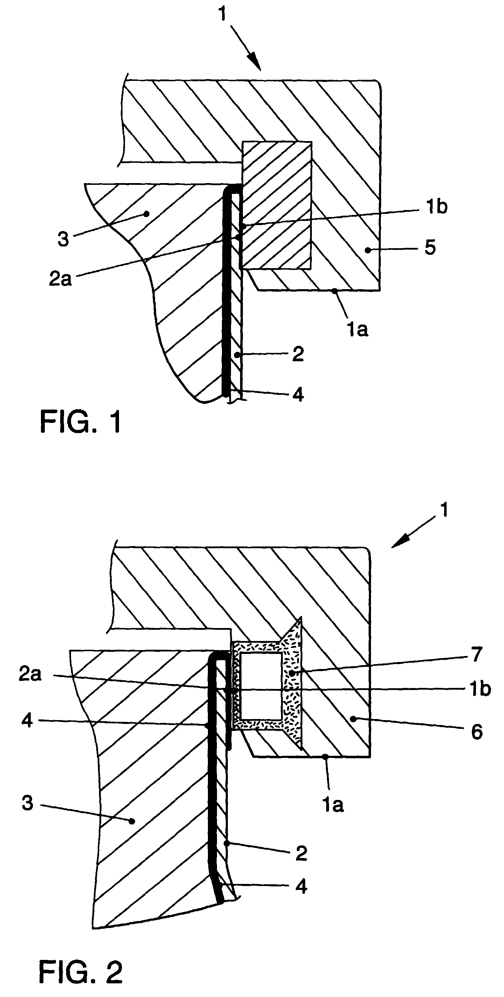

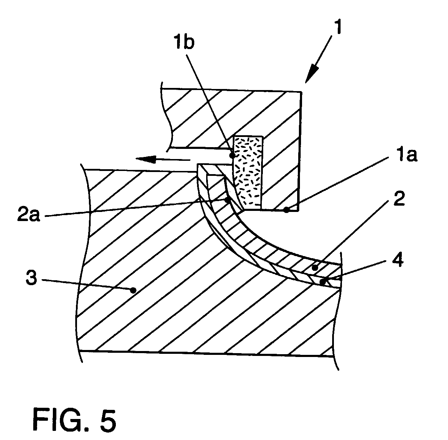

Die Fig. 1 - 5 zeigen einen im wesentlichen L-fömig ausgeführten Umbugschieber 1 zum Kaschieren des Randbereichs 2a eines Halbzeugs 2. Mit Hilfe des Umbugschiebers 1 ist die Rückseite des oberen Randbereichs 2a des in einer Aufnahme 3 angeordneten Halbzeugs 2 mit einer Folie 4 kaschierbar. Der Umbugschieber 1 weist einen unteren Bereich 1a zum Umbiegen einer - im Anfangszustand - über den Randbereich 2a des Halbzeugs 2 hinausstehenden Folie 4 und einen seitlichen Bereich 1b zum Andrücken der umgebogenen Folie 4 auf den oberem Randbereich 2a der Rückseite des Halbzeugs 2 auf.

Die eingangs beschriebenen Nachteile werden nun dadurch vermieden, daß der seitliche Bereich 1b derartig elastisch verformbar ausgeführt ist, so daß der mit der Folie 4 oder dem Halbzeug 2 in Kontakt kommende Teil des seitlichen Bereiches 1b im wesentlichen an die Kontur des Halbzeugs 2 anpaßbar ist. Durch die Möglichkeit der Anpassung des seitlichen Bereiches 1b des Umbugschiebers 1 an die Kontur des Halbzeugs 2 kann die Folie 4 optimal auf die Rückseite des Halbzeugs 2 angepreßt werden.

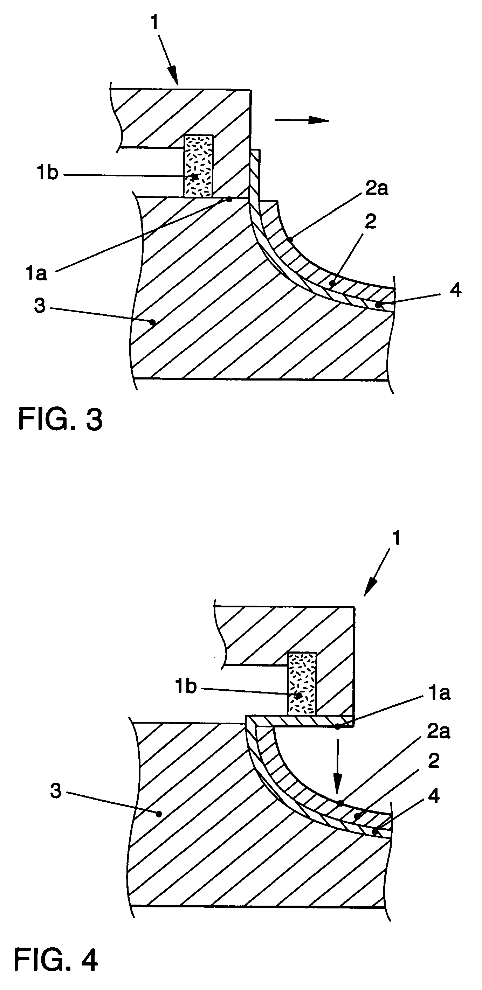

Bevor zu den bevorzugten in Fig. 1 und 2 dargestellten Ausführungsformen näheres erläutert wird, soll der Bewergungsablauf des erfindungsgemäßen Umbugschiebers 1 anhand der Fig. 3 - 5 kurz näher erläutert werden:

Fig. 3 zeigt einen Aufnahme 3 und ein in der Aufnahme 3 angeordnetes Halbzeug 2. Gut zu erkennen ist, daß zwischen Halbzeug 2 und Aufnahme 3 bereits auf der Vorderseite des Halbzeugs 2 eine Folie 4 vorgesehen, nämlich auf das Halbzeug 2 aufgeklebt ist. Über den Randbereich 2a des Halbzeugs 2 steht die Folie 4 noch teilweise hinaus. Oben links ist ein Umbugschieber 1 zu erkennen, der nunmehr in Richtung des Pfeiles im wesentlichen horizontal von links nach rechts bewegt wird.

Bei der horizontalen Bewegung des Umbugschiebers 1 von links nach rechts wird, wie dies in Fig. 4 zu erkennen ist, durch den unteren Bereich 1a des Umbugschiebers 1 die Folie 4 nach rechts unten in Richtung auf die Rückseite des Halbzeugs 2 umgebogen. Nachdem der Umbugschieber 1 die in Fig. 2 dargestellte Position erreicht hat, wird der Umbugschieber 1 im wesentlichen vertikal nach unten bewegt. Hierdurch kann der seitliche Bereich 1b die Folie am oberen Randbereich 2a des Halbzeugs 2 bereits teilweise andrücken. Die über den seitlichen Bereich 1b realisierte Anpreßkraft bzw. vom seitlichen Bereich 1b realisierte Druckkraft gewährleistet - im Endeffekt - eine Haftung der Folie 4, wobei dies aufgrund des elastisch verformbar ausgeführten seitlichen Bereiches 1b optimal realisierbar ist.

Fig. 1 zeigt einen Umbugschieber 1, der insgesamt aus Kunststoffen unterschiedlicher Shore-Härten hergestellt ist, wobei der seitliche Bereich 1b einen die entsprechende Verformung gewährleistenden Kunststoff von entsprechender Shore-Härte aufweist. Fig. 1 zeigt den Umbugschieber 1 in der entsprechenden Anlageposition, so daß die das Aufkleben der Folie 4 auf das Halbzeug 2 erforderliche Anpreßkraft durch die entsprechende Anlage des seitlichen Bereichs 1b realisiert ist. Hierzu kann der Umbugschieber 1 nach dessen Verschiebung nach unten wieder im wesentlichen horizontal nach links bewegt werden, um einen entsprechenden Anpreßdruck sicherzustellen.

Der in Fig. 1 gezeigte Umbugschieber 1 weist eine im wesentlichen hart ausgeführte Kunstharzspitze im unteren Bereich 1a auf. Der seitliche Bereich 1b, der hier aus einer weichen Kunststoffeinlage gebildet ist, hat ein Übermaß von vorzugsweise ca. 0,2 mm mit dessen Hilfe die entsprechenden Toleranzen ausgeglichen werden können.

Fig. 2 zeigt eine zweite Ausführungsform eines Umbugschiebers 1. Der untere Bereich 1a weist eine im wesentlichen harte Messingschieberspitze 6 auf. Der seitliche Bereich 1b weist ein aufblasbares Element 7 auf, wobei im seitlichen Bereich 1b eine hier nicht näher bezeichnete Ausnehmung für das aufblasbare Element 7 vorgesehen ist. Gut zu erkennen ist, daß das aufblasbare Element 7 als eine Art Hohlprofil ausgebildet ist. In das aufblasbare Element 7 ist Druckluft mit vorzugsweise bis max. 5 bar einfüllbar, so daß hierdurch ein entsprechender Anpreßdruck realisierbar ist.

Vzw. wird der hier dargestelle Umbugachieber 1 in einer Vorrichtung als Werkzeug automatisch bewegt. Der Umbugschieber 1 kann wie die Fig. 1 und 2 im Vergleich zu den Fig. 3 bis 5 zeigen, im unteren Bereich 1a unterschiedlich ausgebildet sein. Entscheidend ist die 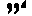 elastische Ausbildung" des seitlichen Bereiches 1b, der mit der Folie 4 bzw. dem Halbzeug 2 in Kontakt kommt.

## Patentansprüche

1. Umbugschieber (1) zum Kaschieren des Randbereiches (2a) eines Halbzeugs (2), wobei mit Hilfe des Umbugschiebers (1) die Rückseite des oberen Randbereiches (2a) des vzw. in einer Aufnahme (3) angeordneten Halbzeugs (2) mit einer Folie (4) kaschierbar ist, wobei der Umbugschieber (1) einen unteren Bereich (1a) einer - im Anfangszustand - über den Randbereich (2a) des Halbzeugs (2) hinausstehende Folie (4) und einen seitlichen Bereich (1b) zum Andrücken der umgebogenen Folie (4) auf den oberen Randbereich (2a) der Rückseite des Halbzeugs (2) aufweist, **dadurch gekennzeichnet**, daß der seitliche Bereich (1b) derartig elastisch verformbar ausgeführt ist, so daß der mit der Folie (4) oder dem Halbzeug (2) in Kontakt kommende Teil des seitlichen Bereiches (1b) im wesentlichen an die Kontur des Halbzeugs (2) anpaßbar ist.

2. Umbugschieber nach dem vorhergehenden Anspruch, **dadurch gekennzeichnet,** daß die das Aufkleben der Folie (4) auf das Halbzeug (2) erforderliche Anpreßkraft durch die entsprechende Anlage des seitlichen Bereichs (1b) realisierbar ist.

3. Umbugschieber nach einem der vorhergehenden Ansprüche**, dadurch gekennzeichnet**, daß der seitliche Bereich (1b) ein aufblasbares Element (7) aufweist.

4. Umbugschieber nach einem der vorhergehenden Ansprüche**, dadurch gekennzeichnet**, daß der Umbugschieber (1) aus einem Metall, vzw. Messing, oder einer Metall-Legierung hergestellt ist und im seitlichen Bereich (1b) eine Ausnehmung für ein aufblasbares Element (7) vorgesehen ist.

5. Umbugschieber nach einem der vorhergehenden Ansprüche, **dadurch gekennzeichnet,** daß das aufblasbare Element (7) als eine Art Hohlprofil ausgebildet ist.

6. Umbugschieber nach einem der vorhergehenden Ansprüche, **dadurch gekennzeichnet,** daß der Umbugschieber (1) aus Kunststoffen unterschiedlicher Shore-Härten hergestellt ist und der seitliche Bereich (1b) einen die entsprechende Verformung gewährleistenden Kunststoff von entsprechender Shore-Härte aufweist.
